# FASCICULE DE BREVET EUROPEEN

(11) **EP 2 374 716 B1**
(45) Date de publication et mention de la délivrance du brevet: **10.10.2012**
(21) Numéro de dépôt: 11305398.7
(22) Date de dépôt: 06.04.2011
(51) Int. Cl.: B64G 1/52, C08K 3/22, C08L 33/14, C08L 75/04, C09D 5/24, C09D 7/12, C09D 133/14, C09D 175/04, C09K 3/16

(54) **Revêtement blanc antistatique à base acrylique hydroxylée**
Hydroxylated acrylic anti-static white covering
Weiße Antistatikbeschichtung auf der Basis von hydroxyliertem Acryl

(30) Priorité: 08.04.2010 FR 1052675
(43) Date de publication de la demande: 12.10.2011
(73) Titulaire: CENTRE NATIONAL D'ETUDES SPATIALES, 75001 Paris (FR)
(72) Inventeur: Remaury, Stéphanie, 31460 AURIAC SUR VENDINELLE (FR); Nabarra, Pascale, 31450 BAZIEGE (FR); Guillaumon, Olivier, 31560 SAINT-LEON (FR); Reymond, Serge, 09340 VERNIOLLE (FR)
(74) Mandataire: Blot, Philippe Robert Emile

(56) Documents cités:
- US-A1- 2002 032 271
- US-A1- 2010 171 908
- US-A1- 2010 208 350

## Description

La présente invention concerne les revêtements conducteurs électriques pour la protection antistatique des substrats diélectriques ou métalliques, notamment d'engins spatiaux, et en particulier les lanceurs et satellites. Ces revêtements doivent répondre à plusieurs exigences : tout d'abord, il est primordial d'éviter l'accumulation de charge en surface. On recherche donc des peintures antistatiques pour éviter ces phénomènes dits de « flash over » (décharges électrostatiques en surface).

Par ailleurs, ces revêtements doivent participer au contrôle thermique de l'engin. Il est donc important que la peinture soit blanche, pour permettre une réflexion totale des rayonnements solaires et éviter un échauffement de l'engin qui pourrait en résulter.

Ainsi, ces peintures doivent répondre à des spécifications très strictes en termes d'absorption solaire (alpha), d'émissivité infrarouge (epsilon), de résistance électrique superficielle et d'adhérence.

Dans la demande FR 2 568 577 est décrit un pigment d'oxyde d'étain dopé à l'oxyde d'antimoine ainsi que les peintures le contenant, permettant notamment l'élimination des charges électrostatiques. Néanmoins, ledit pigment, coloré, doit être mélangé avec un pigment blanc pour répondre aux exigences de faible absorption solaire. Par ailleurs, ce pigment est onéreux et ne répond plus aux normes environnementales européennes. Une peinture à base d'oxyde d'étain et d'oxyde d'antimoine est également décrite dans FR 2 668 491. Néanmoins, là encore, l'ajout de dioxyde de titane est nécessaire pour rendre la peinture blanche.

US 3,538,022 décrit une méthode de fabrication d'oxyde de zinc dopé par de l'oxyde d'aluminium, gallium ou indium.

US 5,312,614 décrit également la production d'un pigment blanc à base d'oxyde de zinc, dopé par de l'oxyde de gallium, ledit pigment étant blanc et électriquement conducteur. Néanmoins, aucun de ces documents ne décrit une peinture contenant un tel pigment, notamment une peinture pour les applications spatiales répondant aux exigences techniques précitées.

L'invention a donc pour objet de fournir un revêtement blanc antistatique, convenant à l'application sur engins spatiaux notamment.

Selon un premier objet, l'invention concerne donc une composition comprenant une composante « base » comprenant au moins un pigment à base d'oxyde de zinc dopé par de l'oxyde de gallium, un liant de type polymère acrylique hydroxylé, un solvant de ce liant.

Ladite composition peut éventuellement comprendre, en outre, une composante « durcisseur » comprenant au moins un agent durcisseur ; généralement, la composition se présente alors sous forme de deux composantes séparées (kit).

Ledit liant peut être choisi notamment parmi :
- les polymères acryliques hydroxylés, tel que par exemple ALBERDINGK® AC2597VP et/ou MACRYNAL® SM510N
- les polymères acrylate/polybutadiène ou polyester hydroxylé habituellement utilisé pour les revêtements. On peut ainsi citer à titre illustratif les polyesters hydroxylés de type DESMOPHEN® commercialisés par Bayer, tel que DESMOPHEN 1100 et DESMOPHEN 651

Généralement, le taux de fonctions hydroxyles dans le polymère acrylique ou acrylate/polybutadiène est compris entre1 et 10 % massique.

Comme solvant, on peut utiliser, à titre indicatif, des hydrocarbures aromatiques (toluène, xylène, styrène, naphta, etc.), des hydrocarbures aliphatiques (white spirit, essences, pétrole, etc.), des cétones (méthyléthylcétone, méthylisobutylcétone, diacétone alcool, etc.), des esters (acétate d'éthyle, acétate de méthyle, acétate de propyle, acétate d'étylèneglycol, acétate de méthylèneglycol, etc.), des éthers de glycol (éthylglycol, butylglycol, méthylèneglycol, propylèneglycol, etc.), des alcools (éthanol, propanol, méthanol, etc.), alcanes aliphatiques tel que le n-heptane et aromatiques, esters, cétones, siloxanes à faibles poids moléculaires notamment, des hydrocarbures terpéniques (essence de térébenthine, etc.), et de l'eau. On peut citer plus particulièrement l'eau, les alcanes aliphatiques et aromatiques, esters, cétones, siloxanes à faible poids moléculaire, et notamment l'hexaméthyldisiloxane, l'octaméthyltrisiloxane et l'octaméthylcyclotétrasiloxane.

Le liant peut être en émulsion ou dispersion dans l'eau ou soluble dans lesdits solvants organiques.

La proportion de solvant peut aller jusqu'à 60 % en poids de la «base».

Le pigment est préférentiellement de l'oxyde de zinc (ZnO) dopé par Ga₂O₃, généralement à 1-2% (poids) de Ga₂O₃. Le pigment selon l'invention peut être préparé par application ou adaptation de méthodes connues en soi, telles que par traitement en température et sous atmosphère réductrice, et notamment selon les méthodes décrites dans US 3,538,022 ou US 5,312,614. Le pigment ZnO/ Ga₂O₃ est généralement utilisé sous forme dispersée ou broyée.

Le pigment peut également comprendre tout autre pigment blanc tel que TiO₂, ZnO, dans des proportions entre 0 et 75% en poids.

Ledit agent durcisseur est choisi parmi les polymères de type polyisocyanate, habituellement utilisés pour les revêtements. On peut ainsi citer à titre illustratif les polyisocyanates de type résine polyisocyanate aliphatique, tels que ceux de la série DESMODUR®, notamment DESMODUR N75, DESMODUR XP2487/1, etc., commercialisés par Bayer.

La composante « durcisseur » peut également comprendre un solvant.

La composante «durcisseur» peut également comprendre un solvant choisi parmi l'eau, les hydrocarbures tels que les alcanes aliphatiques et aromatiques, esters, cétones, siloxanes à faible poids moléculaire, et leurs mélanges. On peut plus particulièrement citer les solvants à base de propylène glycol, tels que ceux de la série Dowanol ® commercialisés par Dow, notamment le propylèneglycolméthylétheracétate.

La composante «base» et/ou la composante «durcisseur» peut éventuellement comprendre en outre un catalyseur. Ledit catalyseur peut être choisi parmi tout catalyseur utilisé pour favoriser les réactions à froid ou à chaud, tels que les dérivés de l'étain ou du cobalt notamment, tel que le dibutyldiacétate d'étain. Le catalyseur peut être compris à raison de 0 à 10 % en poids de la «base». Généralement, le catalyseur est ajouté en quantité telle que le rapport (poids) catalyseur : liant est inférieur à 0,5 %, préférentiellement compris entre 0,1 et 0,2%.

Généralement, les compositions selon l'invention sont telles que le rapport pigment : liant est compris entre 1 et 7 (poids). De préférence, ledit rapport pigment : liant en poids est compris entre 1 et 4, encore plus préférentiellement entre 1 et 2.

Sans toutefois être liés par la théorie, les inventeurs ont identifié que le rapport pigment : liant permettait notamment d'ajuster les propriétés d'adhérence et de résistance électrique de la composition. Ainsi, lorsque ce rapport augmente, l'adhérence de la composition diminue. Inversement, lorsque ce rapport diminue, la résistance électrique augmente.

Bien entendu, les compositions de l'invention peuvent comprendre dans la «base» et/ou le «durcisseur», tous adjuvants désirés communément employés dans les formulations de revêtements, à condition, bien sûr, qu'ils ne dégradent pas excessivement les spécifications techniques précitées. On peut ainsi citer par exemple les agents de rhéologie et adjuvants permettant d'améliorer les performances d'adhérence, couverture, séchage ou conservation notamment. On peut ainsi notamment citer les adjuvants de type AEROSIL® distribués par EVONIK Industries. La proportion de ces agents peut varier entre 0,5 et 25% (poids) de la composition totale.

Selon un autre objet, l'invention concerne également le procédé de préparation d'une composition selon l'invention.

Le procédé comprend la préparation de la «base» d'une part par mélange de ses constituants et éventuellement la préparation du «durcisseur» d'autre part par mélange de ses constituants.

Selon un autre objet, la présente invention concerne également le procédé de préparation d'un revêtement comprenant la réticulation de la composante «base»,
- soit par mélange des composantes « base » et « durcisseur » lorsque la composition comprend une telle composante « durcisseur »; le mélange de la «base» et du «durcisseur» est habituellement réalisé sous agitation manuelle ou mécanique ;
- soit le séchage physique de la composante «base», par action de la température, à température supérieure ou égale à 40°C.

Le type d'équipement et l'outillage, ainsi que la vitesse de cisaillement peuvent être adaptés par l'homme du métier selon des pratiques usuelles afin d'obtenir une dispersion homogène propice à l'obtention d'un film conducteur.

Selon un autre objet, la présente invention concerne également le revêtement susceptible d'être ainsi obtenu par ledit procédé.

Le revêtement selon l'invention satisfait notamment aux normes réglementaires requises pour les engins spatiaux, à savoir :
- facteur d'absorptivité solaire a inférieur ou égal à 0,3 ;
- émissivité infra-rouge (ε) supérieure ou égale à 0,8 ;
- résistance électrique superficielle comprise entre 1 et 1000 MΩ/□ selon la norme ASTMD 257-97 ou -98, -99 ou ASTM D257-07, telle que mesurée à la pression atmosphérique ou sous vide primaire (10⁻³ Torr) ;
- adhérence de classe 0 ou 1 sur 5, de préférence 0 selon la norme NFEN ISO2409 (classement 30-038).

Les peintures pour satellites doivent, par ailleurs, présenter un faible dégazage sous vide (Norme ESA ECSS-Q-70-02A).

Les revêtements selon l'invention peuvent présenter une viscosité comprise entre 10 et 30 s coupe AFNOR n °6 ou 10 à 30 s coupe AFNOR N °4. Ils ont généralement un comportement rhéologique de type newtonien ou thixotrope.

Selon un autre objet, la présente invention concerne également les substrats revêtus d'un revêtement selon l'invention. Lesdits substrats sont généralement tout support métallique ou diélectrique nécessitant un tel revêtement, notamment dans les domaines aéronautique, aérospatial, militaire photovoltaïque, électrique et chimique.

Le revêtement de l'invention peut être appliqué sur toutes sortes de substrats tels que des polyimides, des composites de polyimides ou d'époxydes renforcés de fibres de verre, de fibres d'aramide (Kevlar®), de fibres de carbone, verre, Kapton®, etc., ou des métaux.

On peut ainsi citer les satellites, lanceurs ou tout élément de tels satellites ou lanceurs ainsi revêtus.

Les revêtements de l'invention peuvent s'appliquer en une ou plusieurs couches sur le substrat à peindre, et leur épaisseur peut varier de quelques micromètres à quelques millimètres selon les applications envisagées. Généralement, l'épaisseur par couche est avantageusement comprise entre 5 et 250 µm, avec une résistance électrique superficielle comprise entre 1 et 1000 MΩ/□.

L'application de la couche de revêtement de l'invention sur un substrat est réalisée sous forme de film de peinture et peut s'effectuer par pulvérisation mécanique manuelle ou automatique au pistolet à peinture, à la brosse, au pinceau, au pochoir ou par toute autre technique connue.

Si désiré ou nécessaire, on peut appliquer une couche de primaire d'accrochage, ou toute autre couche primaire, par exemple primaire d'adhérence ou anti-corrosion, avant d'appliquer le revêtement de l'invention. Plus particulièrement dans le cas des substrats métalliques, les primaires d'adhérence et d'anticorrosion MAPSIL® P255 red/clear, Alu-D, E' et MAPSIL® SILICo, commercialisés par la société MAP pourront être appliqués. Dans le cas de supports diélectriques, des primaires d'adhérence (MAPSIL® P255 clear, Alu-D, Kapt A et E' notamment commercialisés par la société MAP) pourront être avantageusement appliqués.

L'application du revêtement peut être avantageusement réalisée avec un séchage simultané permettant d'évaporer les solvants.

Les exemples suivants sont donnés à titre illustratif et non limitatif de la présente invention.

### Exemple 1 :

On mélange dans 21 g d'acrylate hydroxylé ALBERDINGK AC2597VP, 42 g de pigment ZnO/Ga2O3 », 28 g d'eau, 4 g d'adjuvants (AMP90). Par ailleurs, on prépare un mélange de 3,75 g de polyisocyanate DESMODUR XP2487/1 dans 1.25 g de solvants (DOWANOL® PMA).

Puis, au moment de l'application, on mélange sous agitation mécanique les deux pré-mix.

### Exemple 2 :

On mélange dans 12 g d'acrylate hydroxylé MACRYNAL SM510N, 47 g de pigment ZnO/Ga2O3 », 23 g de DOWANOL PMA, 8 g d'adjuvants (AEROSIL® R 972). Par ailleurs, on prépare un mélange de 7,5 g de polyisocyanate DESMODUR N75 dans 2.5 g de solvants (DOWANOL® PMA).

### Exemple 3 :

- Les compostions selon les exemples 1 à 2 ci-dessus ont été testées pour leur épaisseur, adhérence, absorptivité, émissivité et résistance électrique superficielle. Les résultats sont résumés dans le tableau ci-dessous :

| | Exemple 1 | Exemple 2 |
|---|---|---|
| Epaisseur peinture | 35 µm | 42 µm |
| Adhérence | 0/5 | 0/5 |
| αₚ | 0.28 | 0.29 |
| εₙ | 0.89 | 0.89 |
| Rₛ | 20 à 50 MΩ/□ | 20 à 50 MΩ/□ |

## Revendications

1. Composition comprenant une composante «base» comprenant au moins un pigment à base d'oxyde de zinc dopé par de l'oxyde de gallium, un liant de type polymère acrylique hydroxylé, un solvant de ce liant.

2. Composition selon la revendication 1 comprenant en outre une composante « durcisseur » comprenant au moins un agent durcisseur.

3. Composition selon la revendication 1 ou 2 telle que ledit liant est choisi parmi :
- les polymères acryliques hydroxylés,
- les polymères acrylate/polybutadiène hydroxylé ou polyester hydroxylé.

4. Composition selon la revendication 1, 2 ou 3 telle que le taux de fonctions hydroxyles dans le polymère acrylique ou acrylate/polybutadiène est compris entre 1 et 10% massique.

5. Composition selon la revendication 1, 2 ou 3 telle que le pigment comprend l'oxyde de zinc (ZnO) dopé par Ga₂O₃.

6. Composition selon l'une quelconque des revendications précédentes telle que la composante «base» et/ou la composante « durcisseur » comprend en outre un catalyseur.

7. Composition selon l'une quelconque des revendications précédentes telle que l'agent durcisseur est choisi parmi les polymères de type polyisocyanate.

8. Composition selon l'une quelconque des revendications précédentes telle que la composante «durcisseur» comprend en outre un solvant.

9. Composition selon l'une quelconque des revendications précédentes telle que le rapport pigment : liant est compris entre 1 et 7 (poids).

10. Procédé de préparation d'une composition selon l'une quelconque des revendications 1 à 9 comprenant la préparation de la «base» d'une part par mélange de ses constituants et éventuellement la préparation du «durcisseur» d'autre part par mélange de ses constituants.

11. Procédé de préparation d'un revêtement comprenant la réticulation de la composante «base» d'une composition selon l'une quelconque des revendications précédentes.

12. Revêtement susceptible d'être obtenu par le procédé selon la revendication 11.

13. Revêtement selon la revendication 12 tel qu'il présente les caractéristiques suivantes :
- facteur d'absorptivité solaire α inférieur ou égal à 0,3 ;
- émissivité infra-rouge (ε) supérieure ou égale à 0,8 ;
- résistance électrique superficielle comprise entre 1 et 1000 MΩ/□ selon la norme ASTMD 257-97 ou-98, -99, ou ASTM D257-07 telle que mesurée telle que mesurée à la pression atmosphérique ou sous vide primaire (10⁻³ Torr),
- adhérence de classe 0 ou 1 sur 5 selon la norme NFEN ISO2409 (classement 30-038).

14. Substrat revêtu d'un revêtement selon la revendication 12 ou 13.

15. Substrat selon la revendication 14 choisi parmi les satellites, lanceurs ou tout élément de tels satellites ou lanceurs.

## Claims

1. A composition comprising a « base » component comprising at least one pigment based on zinc oxide doped with gallium oxide, a binder of the hydroxylated acrylic polymer type, a solvent of this binder.

2. The composition according to claim 1, further comprising a « hardener » component comprising at least one hardener.

3. The composition according to claim 1 or 2, such that said binder is selected from:
- hydroxylated acrylate polymers,
- hydroxylated acrylate/polybutadiene polymers or hydroxylated polyester.

4. The composition according to claim 1, 2 or 3, such that the level of hydroxyl functions in the acrylic or acylate/polybutadiene polymer is comprised between 1 and 10% by mass.

5. The composition according to claim 1, 2 or 3 such that the pigment comprises zinc oxide (ZnO) doped with Ga₂O₃.

6. The composition according to any one of the preceding claims such that the « base » and/or « hardener » component further comprises a catalyst.

7. The composition according to any of the preceding claims such that the hardener is selected from polymers of the polyisocyanate type.

8. The composition according to any of the preceding claims such that the « hardener » component further comprises a solvent.

9. The composition according to any of the preceding claims such that the pigment binder ratio is comprised between 1 and 7 (by weight).

10. A process for preparing a composition according to any of the preceding claims comprising the preparation of the « base » component by mixing its constituents on the one hand and the preparation of the « hardener » component by mixing its constituents on the other hand.

11. A processor preparing a coating comprising the cross-linking of the « base » component of a composition according to any of the preceding claims.

12. A coating obtainable by the method according to claim 11.

13. The coating according to claim 12 such that it has the following characteristics:
- a solar absorptivity factor α of less than or equal to 0.3;
- an infrared emissivity (ε) greater than or equal to 0.8;
- a surface electric resistance comprised between 1 and 1,000 MΩ/□ according to the ASTMD 257-97 or -98, -99 or ASTM D257-07 standard, as measured at atmospheric pressure or in a primary vacuum (10⁻³ torrs);
- an adherence of class 0 or 1 out of 5 according to the NFEN ISO2409 standard (classification 30-038).

14. A substrate coated with a coating according to claim 12 or 13.

15. The substrate according to claim 14 selected from satellites, launchers or any component of such satellites or launchers.

## Patentansprüche

1. Gemisch, einen "Basis"-Besvandteil umfassend, der mindestens ein Pigment auf der Grundlage von mit Galliumoxid geimpftem Zinkoxid umfasst, ein Bindemittel des Typs Hydroxyacrylpolymer, ein Lösungsmittel für dieses Bindemittel.

2. Gemisch nach Patentanspruch 1, außerdem einen "Härter"-Bestandteil umfassend, der mindestens ein Härtemittel aufweist.

3. Gemisch nach Patentanspruch 1 oder 2 derart, dass das genannte Bindemittel unter den folgenden ausgewählt wurde:
- Hydroxyacrylpolymere
- Hydroxyacrylat/-polybutadien oder Hydroxypolyester.

4. Gemisch nach Patentanspruch 1, 2 oder 3 derart, dass der Anteil an Hydroxylgruppen im Akryl- oder Acrylat-/Polybutadienpolymer zwischen 1 und 10 Gewichtsprozent beträgt.

5. Gemisch nach Patentanspruch 1,2 oder 3 derart, dass das Pigment mit Ga₂O₃ geimpftes Zinkoxid (ZnO) umfasst.

6. Gemisch nach irgendeinem der vorangehenden Patentansprüche derart, dass der "Basis"- und/oder der "Härter"-Bestandteil außerdem einen Katalysator enthält.

7. Gemisch nach irgendeinem der vorangehenden Patentansprüche derart, dass das Härtemittel unter den Polymeren vom Typ Polyisocyanat gewählt wurde.

8. Gemisch nach irgendeinem der vorangehenden Patentansprüche derart, dass der "Härter"-Bestandteil außerdem ein Lösungsmittel umfasst.

9. Gemisch nach irgendeinem der vorangehenden Patentansprüche derart, dass das Gewichtsverhältnis Pigment : Bindemittel zwischen 1 and 7 beträgt.

10. Verfahren zur Herstellung eines Gemisches nach irgendeinem der Patentansprüche 1 bis 9, einerseits die Herstellungder "Basis" durch Mischen ihrer Bestandteile umfassend und eventuell andererseits die Herstellung des "Härters" durch Mischen seiner Bestandteile.

11. Verfahren zur Ausbildung einer Beschichtung, die Vernetzung des "Basis"-Bestandteils eines Gemisches nach irgendeinem der vorangehenden Patentansprüche umfassend.

12. Beschichtung, die nach dem Verfahren nach Patentanspruch 11 erhalten werden kann.

13. Beschichtung nach Patentanspruch 12 derart, dass sie die folgenden Merkmale ausweist:
- Solarabsorptionsfaktor α kleiner oder gleich 0,3;
- Infrarot-Emissivität (ε) größer oder gleich 0,8;
- elektrischer Oberflächenwiderstand zwischen 1 und 1000 MΩ/□ nach Norm ASTMD 257-97 oder -98, -99 oder ASTM D257-07, bei Umgebungsdruck gemessen oder unter Grobvakuum (10⁻³ Torr),
- Haftvermögen der Klasse 0 oder 1 von 5 nach der Norm NFEN ISO2409 (Klassifizierung 30-038).

14. Mit einer Beschichtung nach Patentanspruch 12 oder 13 beschichteter Träger.

15. Träger nach Patentanspruch 14, ausgewählt unter Satelliten, Trägerraketen oder einem beliebigen Bauteil derartiger Satelliten oder Trägerraketen.
